# EUROPEAN PATENT APPLICATION

(11) **EP 4 134 803 A1**
(43) Date of publication of application: **15.02.2023**
(21) Application number: 22187298.9
(22) Date of filing: 27.07.2022
(51) Int. Cl.: G06F 3/06

(54) **INFORMATION PROCESSING APPARATUS, INFORMATION PROCESSING METHOD, AND INFORMATION PROCESSING PROGRAM**

(30) Priority: 13.08.2021 JP 2021132036
(71) Applicant: FUJIFILM Corporation, Tokyo 106-8620 (JP)
(72) Inventor: OISHI, Yutaka, Tokyo, 106-8620 (JP); KONDO, Michitaka, Tokyo, 106-8620 (JP); OTSUKA, Misaki, Tokyo, 106-8620 (JP); MASUDA, Yuko, Tokyo, 106-8620 (JP)
(74) Representative: Klunker IP Patentanwälte PartG mbB

(57) **Abstract**

An information processing apparatus performs first migration processing of migrating data from a relatively-old-generation magnetic tape included in one storage pool of a plurality of storage pools to relatively-new-generation magnetic tapes included in each of the plurality of storage pools in a case where a total value of free capacities of the relatively-new-generation magnetic tapes in each of the plurality of storage pools is equal to or larger than a threshold value, and performs second migration processing of migrating data from a plurality of migration-source magnetic tapes included in the storage pool to migration-destination magnetic tapes of which the number is smaller than the number of the migration-source magnetic tapes in a case where the total value is smaller than the threshold value.

## Description

### BACKGROUND OF THE INVENTION

### 1. Field of the Invention

The present disclosure relates to an information processing apparatus, an information processing method, and an information processing program.

### 2. Description of the Related Art

WO2014/141355A discloses a technique of determining, in a storage having a hierarchical structure, based on a usage status of an upper layer storage or a lower layer storage, which of update processing and data migration processing is to be executed with priority, the update processing being processing of updating search indexes of pieces of data stored in the upper layer storage, and the data migration processing being processing of migrating data from the upper layer storage to the lower layer storage.

### SUMMARY OF THE INVENTION

On the other hand, there is known a technique of configuring a storage pool using a plurality of magnetic tapes and providing a logical volume to a user. In addition, there is also known a technique of multiplexing and storing data by recording the same data in a plurality of storage pools. Further, in a storage system using magnetic tapes, for the purpose of storing data for a long term, increasing a capacity per magnetic tape, and improving a transmission speed, processing of migrating data recorded in an old-generation magnetic tape to a new-generation magnetic tape is performed.

The present disclosure provides an information processing apparatus, an information processing method, and an information processing program capable of migrating data recorded in an old-generation magnetic tape to a new-generation magnetic tape while preventing an increase in the number of the magnetic tapes.

According to an aspect of the present disclosure, there is provided an information processing apparatus including: at least one processor that performs control of migrating data recorded in a plurality of storage pools in which the same data is recorded and each of which includes a plurality of magnetic tapes, in which the processor is configured to perform first migration processing of migrating data from a relatively-old-generation magnetic tape included in one storage pool of the plurality of storage pools to relatively-new-generation magnetic tapes included in each of the plurality of storage pools in a case where a total value of free capacities of the relatively-new-generation magnetic tapes in each of the plurality of storage pools is equal to or larger than a threshold value, and perform second migration processing of migrating data from a plurality of migration-source magnetic tapes included in the storage pool to migration-destination magnetic tapes of which the number is smaller than the number of the migration-source magnetic tapes in a case where the total value is smaller than the threshold value.

In the information processing apparatus according to the aspect of the present disclosure, the migration-source magnetic tapes may be relatively-old-generation magnetic tapes, and the processor may be configured to perform, in the second migration processing, control of not migrating, among pieces of data recorded in the migration-source magnetic tapes, data recorded in the relatively-new-generation magnetic tapes of the storage pool to which the migration-source magnetic tapes belong.

Further, in the information processing apparatus according to the aspect of the present disclosure, the processor may be configured to perform, in the second migration processing, control of migrating, among pieces of data recorded in the migration-source magnetic tapes, valid data to the migration-destination magnetic tapes and not migrating invalid data to the migration-destination magnetic tapes.

Further, in the information processing apparatus according to the aspect of the present disclosure, the processor may be configured to perform, as a result of the first migration processing or the second migration processing, control of initializing, among the migration-source magnetic tapes, the magnetic tape from which all pieces of recorded data are migrated to the relatively-new-generation magnetic tapes.

Further, in the information processing apparatus according to the aspect of the present disclosure, in a case where there are empty slots in a tape library and it is assumed that relatively-new-generation magnetic tapes are included in the empty slots, the total value may include, in addition to free capacities of relatively-new-generation magnetic tapes included in the tape library, free capacities of the relatively-new-generation magnetic tapes included in the empty slots.

Further, in the information processing apparatus according to the aspect of the present disclosure, the threshold value may be set according to capacities of the relatively-new-generation magnetic tapes.

Further, in the information processing apparatus according to the aspect of the present disclosure, the threshold value may be set according to sizes of pieces of data recorded in the relatively-old-generation magnetic tape included in the one storage pool.

Further, according to another aspect of the present disclosure, there is provided an information processing method executed by at least one processor of an information processing apparatus, the processor performing control of migrating data recorded in a plurality of storage pools in which the same data is recorded and each of which includes a plurality of magnetic tapes, the method including: performing first migration processing of migrating data from a relatively-old-generation magnetic tape included in one storage pool of the plurality of storage pools to relatively-new-generation magnetic tapes included in each of the plurality of storage pools in a case where a total value of free capacities of the relatively-new-generation magnetic tapes in each of the plurality of storage pools is equal to or larger than a threshold value; and performing second migration processing of migrating data from a plurality of migration-source magnetic tapes included in the storage pool to migration-destination magnetic tapes of which the number is smaller than the number of the migration-source magnetic tapes in a case where the total value is smaller than the threshold value.

Further, according to still another aspect of the present disclosure, there is provided an information processing program causing at least one processor of an information processing apparatus to execute a process, the processor performing control of migrating data recorded in a plurality of storage pools in which the same data is recorded and each of which includes a plurality of magnetic tapes, the process including: performing first migration processing of migrating data from a relatively-old-generation magnetic tape included in one storage pool of the plurality of storage pools to relatively-new-generation magnetic tapes included in each of the plurality of storage pools in a case where a total value of free capacities of the relatively-new-generation magnetic tapes in each of the plurality of storage pools is equal to or larger than a threshold value; and performing second migration processing of migrating data from a plurality of migration-source magnetic tapes included in the storage pool to migration-destination magnetic tapes of which the number is smaller than the number of the migration-source magnetic tapes in a case where the total value is smaller than the threshold value.

According to the present disclosure, it is possible to migrate data recorded in the old-generation magnetic tape to the new-generation magnetic tape while preventing an increase in the number of the magnetic tapes.

### BRIEF DESCRIPTION OF THE DRAWINGS

Fig. 1 is a block diagram illustrating an example of a configuration of an information processing system.
Fig. 2 is a block diagram illustrating an example of a hardware configuration of an information processing apparatus.
Fig. 3 is a diagram illustrating an example of a tape management table.
Fig. 4 is a diagram for explaining invalid data.
Fig. 5 is a diagram for explaining a storage pool.
Fig. 6 is a diagram for explaining first migration processing.
Fig. 7 is a diagram for explaining second migration processing.
Fig. 8 is a block diagram illustrating an example of a functional configuration of the information processing apparatus.
Fig. 9 is a flowchart illustrating an example of data migration processing.
Fig. 10 is a diagram for explaining free capacities according to a modification example.

### DESCRIPTION OF THE PREFERRED EMBODIMENTS

Hereinafter, an example of an embodiment for performing a technique according to the present disclosure will be described in detail with reference to the drawings.

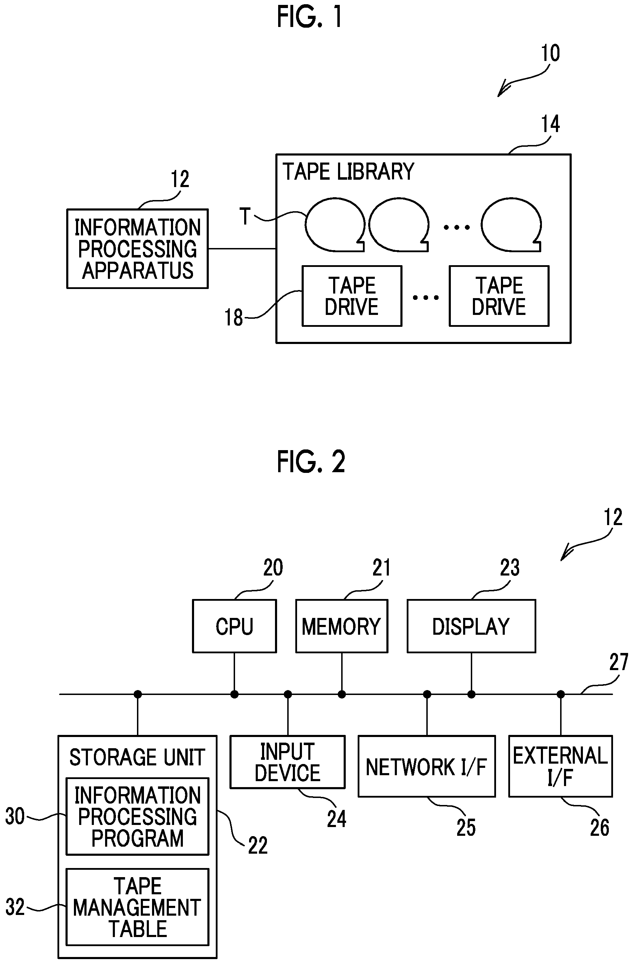

First, a configuration of an information processing system 10 according to the present embodiment will be described with reference to Fig. 1. As illustrated in Fig. 1, the information processing system 10 includes an information processing apparatus 12 and a tape library 14. Examples of the information processing apparatus 12 include a server computer and the like.

The tape library 14 includes a plurality of slots (not illustrated) and a plurality of tape drives 18, and each slot includes a magnetic tape T as an example of a recording medium. Each tape drive 18 is connected to the information processing apparatus 12. The tape drive 18 writes or reads data to or from the magnetic tape T under a control of the information processing apparatus 12. Examples of the magnetic tape T include a linear tape-open (LTO) tape.

In a case where the information processing apparatus 12 writes or reads data to or from the magnetic tape T, the magnetic tape T as a write target or a read target is loaded from the slot into a predetermined tape drive 18. In a case where data is written or read to and from the magnetic tape T loaded into the tape drive 18, the magnetic tape T is unloaded from the tape drive 18 into the slot in which the magnetic tape T is originally included.

Next, a hardware configuration of the information processing apparatus 12 according to the present embodiment will be described with reference to Fig. 2. As illustrated in Fig. 2, the information processing apparatus 12 includes a central processing unit (CPU) 20, a memory 21 as a temporary memory area, and a non-volatile storage unit 22. Further, the information processing apparatus 12 includes a display 23 such as a liquid crystal display, an input device 24 such as a keyboard and a mouse, a network interface (I/F) 25 connected to a network, and an external I/F 26 to which each tape drive 18 is connected. The CPU 20, the memory 21, the storage unit 22, the display 23, the input device 24, the network I/F 25, and the external I/F 26 are connected to a bus 27.

The storage unit 22 is realized by a hard disk drive (HDD), a solid state drive (SSD), a flash memory, or the like. An information processing program 30 is stored in the storage unit 22 as a storage medium. The CPU 20 reads the information processing program 30 from the storage unit 22, develops the read information processing program 30 in the memory 21, and executes the developed information processing program 30.

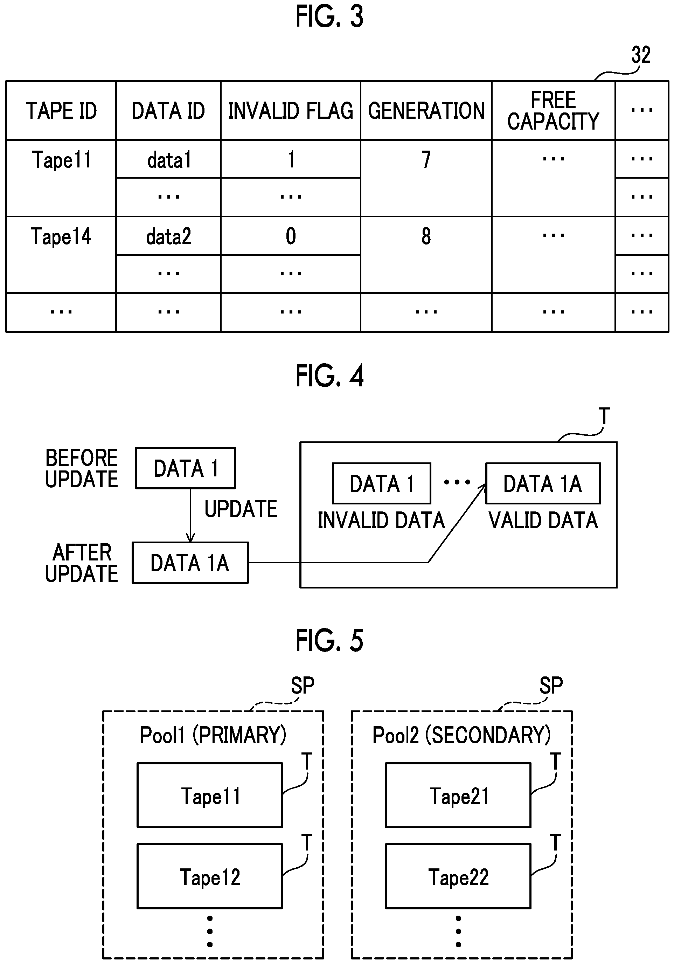

Further, the storage unit 22 stores a tape management table 32 for managing the magnetic tape T. Fig. 3 illustrates an example of the tape management table 32. As illustrated in Fig. 3, the tape management table 32 includes a tape identifier (ID) which is an example of identification information of the magnetic tape T and a data ID which is an example of identification information of the data recorded in the magnetic tape T. Further, the tape management table 32 stores information indicating whether the data indicated by the data ID is invalid data or valid data. In the present embodiment, in a case where the data is invalid data, "1" is stored in an invalid flag column, and in a case where the data is valid data, "0" is stored in the invalid flag column.

The invalid data is, for example, data for which a deletion instruction is input by the user and which is logically deleted. In order to physically delete the data for which the deletion instruction is input by the user from the magnetic tape T, all pieces of data recorded in the magnetic tape T are temporarily saved in another storage area, the magnetic tape T is initialized, and pieces of data excluding the logically-deleted data among all pieces of the saved data are recorded in the magnetic tape T. For this reason, in order to physically delete the data from the magnetic tape T, the tape drive 18 is occupied for a relatively long time. Therefore, in the present embodiment, the data for which the deletion instruction is input by the user is logically deleted by storing "1" in the invalid flag column of the tape management table 32. Thereby, the data will not be accessed by the user.

Further, as an example, as illustrated in Fig. 4, in the present embodiment, data updated by the user is not overwritten in the magnetic tape T, but the updated data is newly recorded in the magnetic tape T. In this case, the data before update that is recorded in the magnetic tape T will not be accessed by the user. Therefore, the invalid data may be the data before update that is no longer accessed by the user due to update. In addition, the invalid data may be both logically-deleted data and data before update. Further, the valid data means data other than the invalid data, that is, data that may be accessed by the user.

Further, as illustrated in Fig. 3, the tape management table 32 also includes information indicating a generation of a standard of the magnetic tape T and information indicating a free capacity of the magnetic tape T. The generation of the standard of the magnetic tape T is, for example, LTO7, LTO8, or the like. In the following, the generation of the standard of the magnetic tape T is simply referred to as a "generation". In the tape library 14, a plurality of generations (in the present embodiment, two generations) of magnetic tapes Ts are included. In the following, out of the two generations, a relatively-old generation is referred to as an "old generation", and a relatively-new generation is referred to as a "new generation".

Further, in the information processing system 10 according to the present embodiment, data is recorded with redundancy. Specifically, as an example, as illustrated in Fig. 5, a plurality of storage pool SPs, each including a plurality of magnetic tapes Ts, are prepared. A first storage pool SP is a storage pool SP for primary data, and a second storage pool SP is a storage pool SP for secondary data. The same data is multiplexed and recorded in the two storage pools SPs. That is, a multiplicity is 2. The multiplicity is not limited to 2, and may be 3 or more. In a case where data transmitted from a user terminal (not illustrated) is received, the information processing apparatus 12 performs control of recording the data in each of the two storage pools SPs. Normally, data is read from the magnetic tape T included in the storage pool SP for primary data. In a case where data cannot be read from the storage pool SP for primary data, data is read from the magnetic tape T included in the storage pool SP for secondary data.

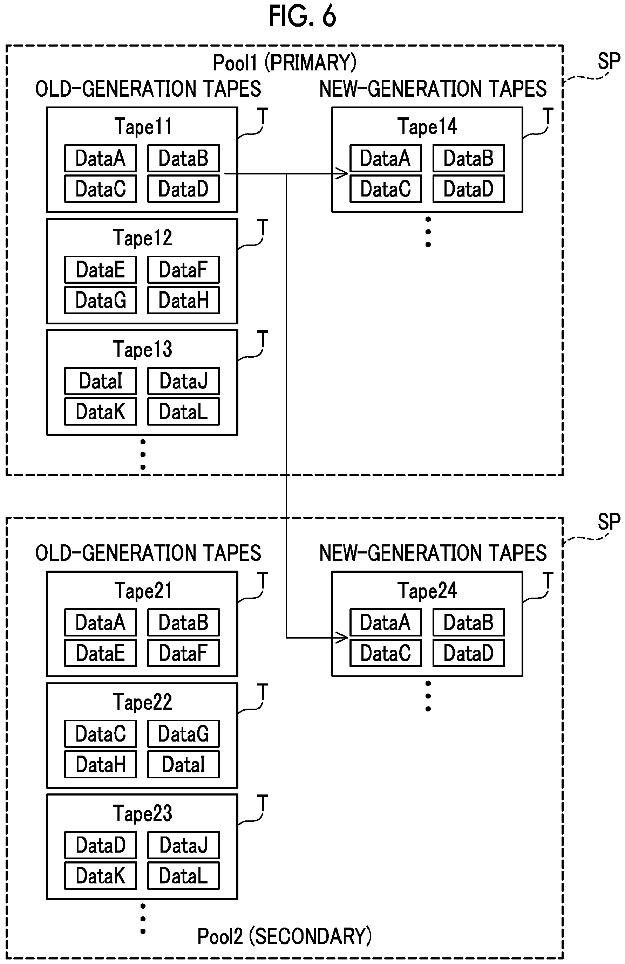

Further, the information processing apparatus 12 performs control of migrating the data recorded in the two storage pools SPs. In the control, the information processing apparatus 12 performs the following two types of data migration processing. The first migration processing is processing of migrating data recorded in an old-generation magnetic tape T to a new-generation magnetic tape T. In the present embodiment, as an example, as illustrated in Fig. 6, in the first migration processing, the information processing apparatus 12 duplicates and migrates data from the old-generation magnetic tape T included in one storage pool SP to the new-generation magnetic tape T included in each of two storage pools SPs. This is, for example, to shorten a reading time in data migration and to reduce the number of the tape drives 18 used for reading.

Although the same data is recorded in each of two storage pools SPs, the data is not always recorded in the same physical manner in each storage pool SP. For example, as illustrated in Fig. 6, in the first storage pool SP, "DataA" and "DataC" are recorded in the same magnetic tape T. On the other hand, in the second storage pool SP, "DataA" and "DataC" may be recorded in different magnetic tapes T. This is due to, for example, a difference in data recording density of the magnetic tape T, and a deviation in data recording location on the magnetic tape T by recovery processing of an error occurring when data is recorded in the magnetic tape T.

In this case, depending on the storage pool SP, the old-generation magnetic tape T cannot be reused or discarded, and thus the number of the magnetic tapes Ts in use is increased. In the example of Fig. 6, in "Pool1", all pieces of data recorded in "Tape 11" are migrated to "Tape14", and thus "Tape11" can be reused or discarded. On the other hand, in "Pool2", "DataE" and "DataF" recorded in "Tape21" are not migrated to "Tape24", and thus "Tape21" cannot be reused or discarded.

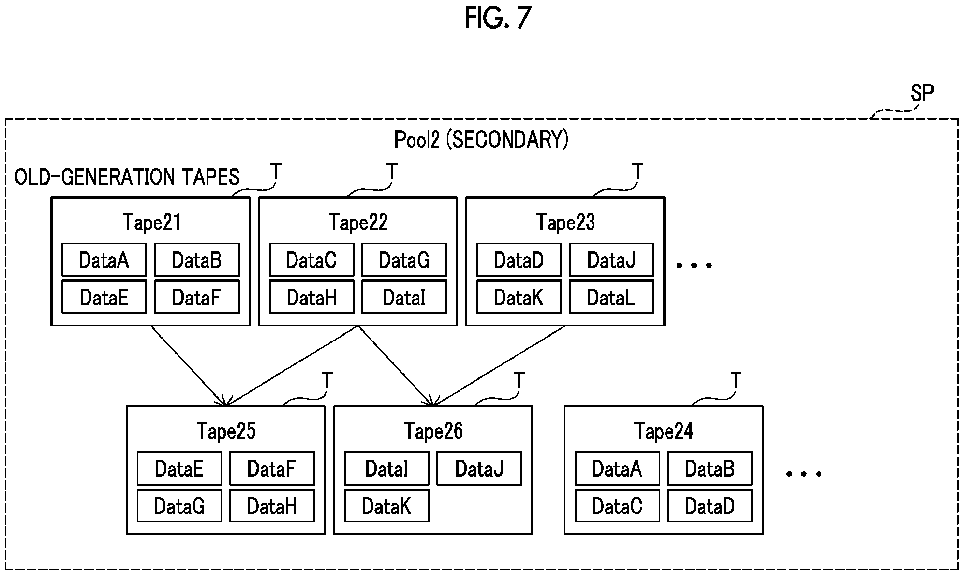

Therefore, as an example, as illustrated in Fig. 7, the information processing apparatus 12 performs, as second migration processing, processing of migrating data from a plurality of migration-source magnetic tapes Ts included in the storage pool SP to migration-destination magnetic tapes T of which the number is smaller than the number of the migration-source magnetic tapes T. In the present embodiment, a case where, in the second migration processing, data migration is performed on each storage pool SP of the two storage pools SPs and a migration-source magnetic tape T is an old-generation magnetic tape T will be described as an example. Fig. 7 illustrates an example in which there are three migration-source magnetic tapes Ts and there are two migration-destination magnetic tapes Ts. On the other hand, the present disclosure is not limited to this example. In addition, in pieces of the second migration processing performed in each of the two storage pools SPs, the second migration processing performed in the second storage pool SP is illustrated in Fig. 7.

Further, as illustrated in Fig. 7, in the second migration processing, the information processing apparatus 12 performs control of not migrating, among pieces of data recorded in the migration-source magnetic tapes Ts, data recorded in the new-generation magnetic tape T of the storage pool SP to which the migration-source magnetic tapes T belong. In the example of Fig. 7, "DataA" to "DataD" recorded in the new-generation magnetic tape T "Tape24" by the first migration processing are not migrated.

Further, as illustrated in Fig. 7, in the second migration processing, the information processing apparatus 12 performs control of migrating, among pieces of data recorded in the migration-source magnetic tapes Ts, valid data to the migration-destination magnetic tapes Ts and not migrating invalid data to the migration-destination magnetic tapes Ts. Fig. 7 illustrates an example in which pieces of valid data "DataE" to "DataK" are migrated and invalid data "DataL" is discarded. In the second migration processing, the magnetic tape T in which a ratio of pieces of invalid data is equal to or higher than a certain value or the magnetic tape T in which a total value of sizes of pieces of invalid data is equal to or larger than a certain value is preferentially selected as the migration-source magnetic tape T.

In the second migration processing, the migration-source magnetic tape T and the migration-destination magnetic tape T may be the same generation magnetic tape T, or the migration-destination magnetic tape T may be a new-generation magnetic tape T. Further, in the second migration processing, at least one of the migration-destination magnetic tapes Ts may be the migration-source magnetic tape T. In this case, the information processing apparatus 12 performs control of reading data recorded in the migration-source magnetic tape T, then performs control of initializing at least one of the migration-source magnetic tapes Ts, and use the initialized magnetic tape T as the migration-destination magnetic tape T. Further, the data migration destination in the first migration processing and the second migration processing may be the magnetic tape T in which data is not recorded, or a free area of the magnetic tape T in which data is recorded.

As described above, in a case where only the first migration processing is performed, the old-generation magnetic tape T cannot be reused or discarded depending on the storage pool SP, and thus the number of the magnetic tapes Ts in use is increased. Therefore, the information processing apparatus 12 has a function of selectively executing the first migration processing and the second migration processing.

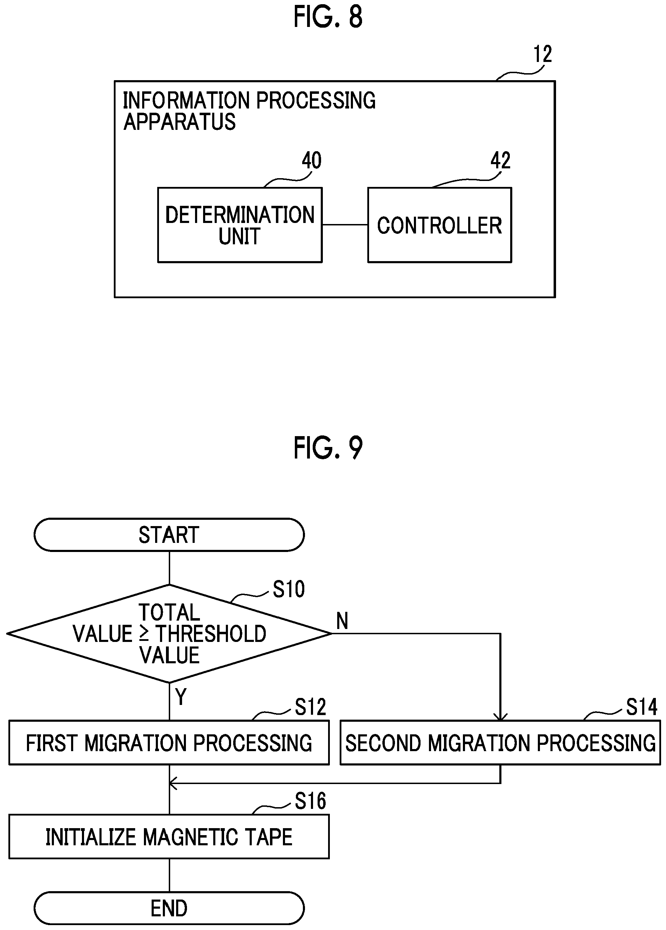

Next, a functional configuration of the information processing apparatus 12 according to the present embodiment will be described with reference to Fig. 8. As illustrated in Fig. 8, the information processing apparatus 12 includes a determination unit 40 and a controller 42. In a case where the CPU 20 executes the information processing program 30, the information processing apparatus 12 functions as the determination unit 40 and the controller 42.

The determination unit 40 determines whether or not a total value of free capacities of the new-generation magnetic tapes T in each of the two storage pools SPs is equal to or larger than a threshold value. The threshold value is set according to the capacity of the new-generation magnetic tape T. Specifically, the threshold value is set to, for example, the capacity of one new-generation magnetic tape T or the capacity of two new-generation magnetic tapes Ts. Further, the threshold value may be set according to sizes of pieces of data recorded in the old-generation magnetic tape T included in one migration-source storage pool SP in the first migration processing. Specifically, the threshold value is set to, for example, a value once or twice the sizes of pieces of data recorded in the old-generation magnetic tape T as the migration source.

In a case where the determination unit 40 determines that the total value is equal to or larger than the threshold value, the controller 42 performs the first migration processing described above. Further, in a case where the determination unit 40 determines that the total value is smaller than the threshold value, the controller 42 performs the second migration processing described above.

Further, as a result of the first migration processing, the controller 42 performs control of initializing, among the magnetic tapes Ts as the data migration source, the magnetic tape T from which all pieces of recorded data are migrated to the new-generation magnetic tape T. As a result of the first migration processing, the controller 42 may perform control of unloading the magnetic tape T from which all pieces of recorded data are migrated to the new-generation magnetic tape T, from the tape library 14.

Further, as a result of the second migration processing, the controller 42 performs control of initializing, among the magnetic tapes Ts as the data migration source, the magnetic tape T from which all pieces of recorded data are migrated to the new-generation magnetic tape T. As a result of the second migration processing, the controller 42 may perform control of unloading the magnetic tape T from which all pieces of recorded data are migrated to the new-generation magnetic tape T among the magnetic tapes Ts as the data migration source, from the tape library 14.

Next, an operation of the information processing apparatus 12 according to the present embodiment will be described with reference to Fig. 9. In a case where the CPU 20 executes the information processing program 30, data migration processing illustrated in Fig. 9 is executed. The data migration processing illustrated in Fig. 9 is executed, for example, at a timing when a data migration instruction is input by a user or at a periodic timing.

In step S10 of Fig. 9, the determination unit 40 determines whether or not a total value of free capacities of the new-generation magnetic tapes T in each of the two storage pools SPs is equal to or larger than a threshold value. In a case where the determination is YES, the process proceeds to step S12. In step S12, the controller 42 performs the first migration processing.

In a case where the determination in step S10 is NO, the process proceeds to step S14. In step S14, the controller 42 performs the second migration processing. As a result of the processing of step S12 or step S14, in step S16, the controller 42 performs control of initializing, among the magnetic tapes Ts as the data migration source, the magnetic tape T from which all pieces of recorded data are migrated to the new-generation magnetic tape T. In a case where the processing of step S16 is completed, data migration processing is completed.

As described above, according to the present embodiment, it is possible to migrate the data recorded in the old-generation magnetic tape T to the new-generation magnetic tape T while preventing an increase in the number of the magnetic tapes Ts.

In the above embodiment, a case where, as a total value V1 of the free capacities of the new-generation magnetic tapes T in the storage pool SP, a total value V2 of the free capacities of the new-generation magnetic tapes T included in the tape library 14 is applied has been described. On the other hand, the present disclosure is not limited thereto. For example, in a case where there are empty slots in the tape library 14 and it is assumed that new-generation magnetic tapes T are included in the empty slots, the total value V1 of the free capacities of the new-generation magnetic tapes Ts in the storage pool SP may include, in addition to the total value V2, a total value V3 of the free capacities of the new-generation magnetic tapes T included in the empty slots.

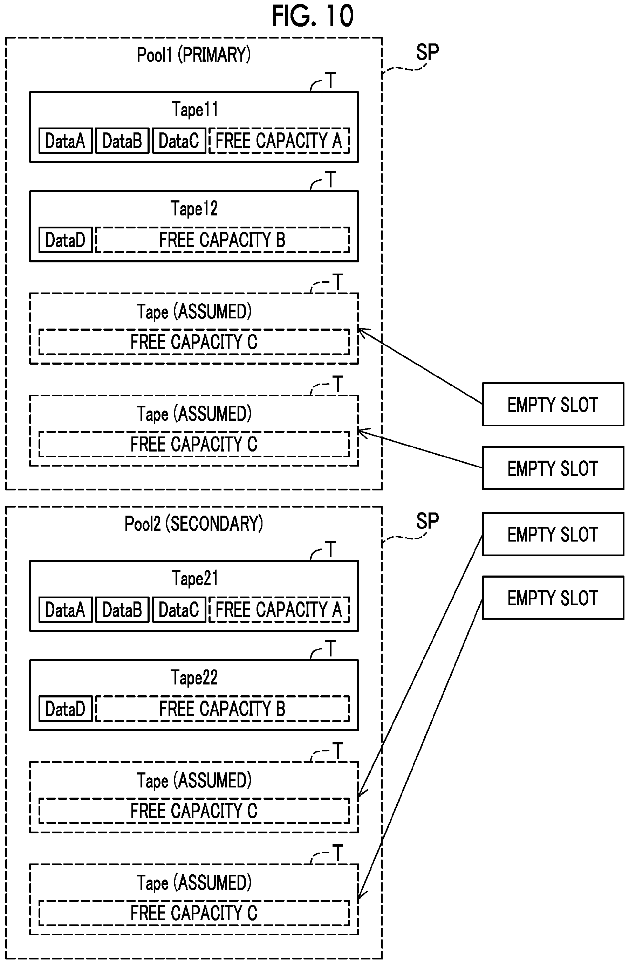

A case where each of the two storage pools SPs includes two magnetic tapes Ts, where the free capacities of the two magnetic tapes Ts are A and B, and where there are four empty slots will be described as an example with reference to Fig. 10. In this case, it is assumed that the four empty slots respectively include four magnetic tapes Ts having a free capacity of C and two magnetic tapes Ts are added to each of the two storage pool SPs. In a case of total value V1 = total value V2 as in the above embodiment, the total value V1 is A + B in each of the two storage pools SPs. On the other hand, in a case of total value V1 = total value V2 + total value V3, the total value V1 is A + B + 2C. In this case, a margin corresponding to the total value V3 may be added to the threshold value.

Further, in the above embodiment, the storage pool SP may include magnetic tapes Ts of three or more generations.

Further, in the embodiment, for example, as a hardware structure of a processing unit that executes various processing such as the determination unit 40 and the controller 42, the following various processors may be used. The various processors include, as described above, a CPU, which is a general-purpose processor that functions as various processing units by executing software (program), and a dedicated electric circuit, which is a processor having a circuit configuration specifically designed to execute a specific processing, such as a programmable logic device (PLD) or an application specific integrated circuit (ASIC) that is a processor of which the circuit configuration may be changed after manufacturing such as a field programmable gate array (FPGA).

One processing unit may be configured by one of these various processors, or may be configured by a combination of two or more processors of the same type or different types (for example, a combination of a plurality of FPGAs or a combination of a CPU and an FPGA). Further, the plurality of processing units may be configured by one processor.

As an example in which the plurality of processing units are configured by one processor, firstly, as represented by a computer such as a client and a server, a form in which one processor is configured by a combination of one or more CPUs and software and the processor functions as the plurality of processing units may be adopted. Secondly, as represented by a system on chip (SoC) or the like, a form in which a processor that realizes the function of the entire system including the plurality of processing units by one integrated circuit (IC) chip is used may be adopted. As described above, the various processing units are configured by using one or more various processors as a hardware structure.

Further, as the hardware structure of the various processors, more specifically, an electric circuit (circuitry) in which circuit elements such as semiconductor elements are combined may be used.

Further, in the embodiment, an example in which the information processing program 30 is stored (installed) in the storage unit 22 in advance has been described. On the other hand, the present disclosure is not limited thereto. The information processing program 30 may be provided by being recorded in a recording medium such as a compact disc read only memory (CD-ROM), a digital versatile disc read only memory (DVD-ROM), or a Universal Serial Bus (USB) memory. Further, the information processing program 30 may be downloaded from an external device via a network.

### Explanation of References

10: information processing system
12: information processing apparatus
14: tape library
18: tape drive
20: CPU
21: memory
22: storage unit
23: display
24: input device
25: network I/F
26: external I/F
27: bus
30: information processing program
32: tape management table
40: determination unit
42: controller
SP: storage pool
T: magnetic tape

## Claims

1. An information processing apparatus comprising:
at least one processor that performs control of migrating data recorded in a plurality of storage pools in which the same data is recorded and each of which includes a plurality of magnetic tapes, wherein
the processor is configured to
perform first migration processing of migrating data from a relatively-old-generation magnetic tape included in one storage pool of the plurality of storage pools to relatively-new-generation magnetic tapes included in each of the plurality of storage pools in a case where a total value of free capacities of the relatively-new-generation magnetic tapes in each of the plurality of storage pools is equal to or larger than a threshold value, and
perform second migration processing of migrating data from a plurality of migration-source magnetic tapes included in the storage pool to migration-destination magnetic tapes of which the number is smaller than the number of the migration-source magnetic tapes in a case where the total value is smaller than the threshold value.

2. The information processing apparatus according to claim 1, wherein
the migration-source magnetic tapes are relatively-old-generation magnetic tapes, and
the processor is configured to perform, in the second migration processing, control of not migrating, among pieces of data recorded in the migration-source magnetic tapes, data recorded in the relatively-new-generation magnetic tapes of the storage pool to which the migration-source magnetic tapes belong.

3. The information processing apparatus according to claim 1 or 2, wherein
the processor is configured to perform, in the second migration processing, control of migrating, among pieces of data recorded in the migration-source magnetic tapes, valid data to the migration-destination magnetic tapes and not migrating invalid data to the migration-destination magnetic tapes.

4. The information processing apparatus according to any one of claims 1 to 3, wherein
the processor is configured to perform, as a result of the first migration processing or the second migration processing, control of initializing, among the migration-source magnetic tapes, the magnetic tape from which all pieces of recorded data are migrated to the relatively-new-generation magnetic tapes.

5. The information processing apparatus according to any one of claims 1 to 4, wherein
in a case where there are empty slots in a tape library and it is assumed that relatively-new-generation magnetic tapes are included in the empty slots, the total value includes, in addition to free capacities of relatively-new-generation magnetic tapes included in the tape library, free capacities of the relatively-new-generation magnetic tapes included in the empty slots.

6. The information processing apparatus according to any one of claims 1 to 5, wherein
the threshold value is set according to capacities of the relatively-new-generation magnetic tapes.

7. The information processing apparatus according to any one of claims 1 to 5, wherein
the threshold value is set according to sizes of pieces of data recorded in the relatively-old-generation magnetic tape included in the one storage pool.

8. An information processing method executed by at least one processor of an information processing apparatus, the processor performing control of migrating data recorded in a plurality of storage pools in which the same data is recorded and each of which includes a plurality of magnetic tapes, the method comprising:
performing first migration processing of migrating data from a relatively-old-generation magnetic tape included in one storage pool of the plurality of storage pools to relatively-new-generation magnetic tapes included in each of the plurality of storage pools in a case where a total value of free capacities of the relatively-new-generation magnetic tapes in each of the plurality of storage pools is equal to or larger than a threshold value; and
performing second migration processing of migrating data from a plurality of migration-source magnetic tapes included in the storage pool to migration-destination magnetic tapes of which the number is smaller than the number of the migration-source magnetic tapes in a case where the total value is smaller than the threshold value.

9. A computer-readable storage medium storing an information processing program causing at least one processor of an information processing apparatus to execute a process, the processor performing control of migrating data recorded in a plurality of storage pools in which the same data is recorded and each of which includes a plurality of magnetic tapes, the process comprising:
performing first migration processing of migrating data from a relatively-old-generation magnetic tape included in one storage pool of the plurality of storage pools to relatively-new-generation magnetic tapes included in each of the plurality of storage pools in a case where a total value of free capacities of the relatively-new-generation magnetic tapes in each of the plurality of storage pools is equal to or larger than a threshold value; and
performing second migration processing of migrating data from a plurality of migration-source magnetic tapes included in the storage pool to migration-destination magnetic tapes of which the number is smaller than the number of the migration-source magnetic tapes in a case where the total value is smaller than the threshold value.
